# FASCICULE DE BREVET EUROPEEN

(11) **EP 2 517 147 B1**
(45) Date de publication et mention de la délivrance du brevet: **08.04.2015**
(21) Numéro de dépôt: 10798757.0
(22) Date de dépôt: 15.12.2010
(51) Int. Cl.: G06K 7/00, H04L 9/00

(54) **PROCEDE DE PROTECTION DANS UNE COMMUNICATION RADIOFREQUENCE SANS CONTACT**
SCHUTZ VERFAHREN IN EINER DRAHTLOSEN RADIOFREQUENZ KOMMUNIKATION
PROTECTION PROCESS IN A WIRELESS RADIO FREQUENCY COMMUNICATION

(30) Priorité: 23.12.2009 FR 0906281
(43) Date de publication de la demande: 31.10.2012
(73) Titulaire: Commissariat à l'Énergie Atomique et aux Énergies Alternatives, 75015 Paris (FR)
(72) Inventeur: SAVRY, Olivier, F-38360 Sassenage (FR); THEVENON, Pierre-Henri, F-38000 Grenoble (FR)
(74) Mandataire: Guérin, Michel
(86) Numéro de dépôt international: PCT/EP2010/069832
(87) Numéro de publication internationale: WO 2011/076644

(56) Documents cités:
- EP-A1- 1 148 190
- EP-A2- 1 271 420
- HANCKE G P ET AL: "An RFID Distance Bounding Protocol", SECURITY AND PRIVACY FOR EMERGING AREAS IN COMMUNICATIONS NETWORKS, 20 05. SECURECOMM 2005. FIRST INTERNATIONAL CONFERENCE ON ATHENS, GREECE 05-09 SEPT. 2005, PISCATAWAY, NJ, USA,IEEE LNKD- DOI:10.1109/SECURECOMM.2005.56, 5 septembre 2005 (2005-09-05), pages 67-73, XP010902873, ISBN: 978-0-7695-2369-9

## Description

L'invention concerne la protection des systèmes de communication sans contact contre les intrusions malveillantes.

Les systèmes de communication sans contact concernés ici sont des systèmes de communication à très courte distance (typiquement quelques dizaines de centimètres, voire quelques mètres) servant de moyens d'identification, d'autorisation d'accès, de paiement, etc.

On s'intéressera principalement aux systèmes RFID (de l'anglais RadioFrequency Identification, ou identification par radiofréquence) définis par des normes, mais l'invention inclut plus généralement d'autres systèmes de communication similaires, définis par d'autres normes, tels que les téléphones NFC (pour Near Field Communication, ou communication en champ proche). Les systèmes RFID servent essentiellement à identifier des objets ou des personnes porteuses de ces objets, pour autoriser un accès à un lieu protégé par exemple ; ces systèmes comportent un lecteur et des badges relativement passifs mais dotés de moyens d'analyse des signaux d'interrogation ou de commande fournis par le lecteur et de moyens de réponse des badges à destination du lecteur ; les applications sont les badges d'accès, les cartes de transport, les étiquettes de marquage, mais aussi les passeports électroniques et même des cartes bancaires sans contact ; les téléphones NFC sont essentiellement des téléphones mobiles pourvus d'une fonction auxiliaire de paiement auprès de distributeurs automatiques ; ils sont typiquement destinés à servir de moyens de paiement par prélèvement sur un compte bancaire lorsqu'ils sont placés à proximité d'une machine de distribution automatique de produits ou de services ou à proximité d'une caisse de paiement chez un commerçant équipé d'un lecteur ad hoc.

Tous ces systèmes reposent sur une communication dans l'air, par des signaux à haute fréquence, entre un lecteur sans contact et un élément mobile qu'on appellera ci-après "carte" indépendamment de sa forme physique qui peut être une carte, un badge, une étiquette, un téléphone mobile, etc.

La transmission se fait le plus souvent par l'intermédiaire d'un champ magnétique radiofréquence et elle utilise une antenne inductive (un simple bobinage de quelques spires) faisant partie du lecteur et une antenne inductive faisant partie de la carte.

Dans ces systèmes, le lecteur envoie en général une porteuse radiofréquence, modulée suivant un protocole de communication pour constituer un signal de commande ; une fréquence porteuse typique dans le cas de cartes sans contact à antenne inductive est de 13,56 MHz, modulée en amplitude ou en phase ou en fréquence, et on considérera dans la suite que c'est une modulation d'amplitude d'une fréquence de 13,56 MHz. Le lecteur attend ensuite une réponse ; si une carte est présente dans la zone géographique proche du lecteur et si le signal de commande implique une réponse de celle-ci, elle réagit et émet une information en retour vers le lecteur. La réponse peut être l'émission d'une simple identification numérique, ou bien elle peut être plus complexe.

La carte peut être dépourvue de source d'alimentation autonome, et dans ce cas l'énergie qui lui permet d'émettre sa réponse est fournie de manière inductive par le champ magnétique radiofréquence produit par l'antenne du lecteur via l'antenne de la carte, pour des applications de communication à faibles distances (jusqu'à quelques dizaines de centimètres).

L'antenne inductive du lecteur joue de préférence à la fois un rôle d'antenne d'émission de signal et un rôle d'antenne de réception pour détecter une modulation de champ électromagnétique induite par la réponse de la carte. La réponse de la carte est en général établie sous forme d'une modulation de charge de son antenne, qui conduit à une modulation de champ électromagnétique, laquelle induit à son tour une modification de l'impédance de l'antenne du lecteur, telle qu'elle est vue par les circuits du lecteur connectés à cette antenne ; c'est cette modification d'impédance qui permet la détection puis l'analyse de la réponse.

Le plus souvent, un signal de commande émis par le lecteur est suivi par un temps d'attente pendant lequel le lecteur émet la porteuse radiofréquence non modulée, puis un temps de réponse de la carte pendant lequel le lecteur continue à émettre la fréquence porteuse non modulée mais c'est la réponse de la carte qui module l'impédance.

Les données acheminées dans ces systèmes sont vulnérables car elles transitent dans l'air dans l'environnement immédiat du lecteur. Elles peuvent être menacées par des attaques malveillantes visant à recueillir les données échangées, ou même visant à substituer une autre carte à la carte légitime dans le dialogue avec le lecteur.

Dans un type d'attaque particulier qu'on appellera ci-après "attaque-relais", la personne malveillante va tenter de faire communiquer un lecteur sans contact (lecteur légitime) et une carte légitime à l'insu de son propriétaire, d'une manière indirecte, par l'intermédiaire d'une autre carte (carte illégitime ou fausse carte) et d'un autre lecteur (lecteur illégitime ou faux lecteur). Dans certains cas la communication malveillante peut ainsi être établie indirectement avec le lecteur légitime alors même que la carte légitime n'est pas proche de ce dernier, le faux lecteur et la fausse carte établissant un relais à distance.

Une des faiblesses des dispositifs sans contact actuels est qu'ils sont toujours en situation d'être actifs ; il n'y a pas de bouton d'extinction pour les neutraliser. Ils peuvent donc être activés à l'insu de leur propriétaire. Un faux lecteur à proximité d'une carte légitime peut activer celle-ci. Une transaction sécurisée peut ainsi être autorisée indirectement sans que le titulaire de la carte ait donné son consentement.

Le cryptage des transactions entre le lecteur et la carte ne protège pas contre une attaque-relais ; en effet, dans l'attaque-relais le faux lecteur et la fausse carte feront transiter les informations cryptées d'une manière transparente ; ils n'ont pas besoin de comprendre le contenu des messages cryptés, il leur suffit de les retransmettre sans les décoder ; le lecteur légitime est bien en communication avec la carte légitime mais d'une manière indirecte.

En pratique, on peut envisager le scénario suivant : le faux lecteur envoie des signaux de commande à la carte légitime en s'approchant très près d'elle ; dans une foule par exemple, les gens sont proches les uns des autres ; les réponses de la carte légitime sont envoyées par le faux lecteur à une fausse carte qui est placée à proximité du lecteur légitime et celle-ci retransmet ces réponses au lecteur légitime ; le lecteur légitime croit donc avoir la carte légitime devant lui ; de même, les commandes du lecteur légitime sont renvoyées par la fausse carte au faux lecteur. L'ensemble de la communication est interceptée. La liaison entre la fausse carte et le faux lecteur peut se faire par voie filaire ou encore par voie hertzienne. La communication peut même se faire par téléphone portable ou par internet, à la condition toutefois que la fausse carte ne se contente pas d'amplifier et retransmettre les signaux mais qu'elle soit pourvue de moyens de démodulation et de re-modulation (mais pas nécessairement de décryptage) pour remettre les signaux dans le protocole de transmission adapté (GSM ou protocole internet) avant de les envoyer. L'attaque peut alors être faite à grande distance sans que les moyens de cryptage l'empêchent.

Pour échapper à ces attaques, les méthodes suivantes ont été imaginées :
- on mesure à l'aide d'une transmission radio ultralarge bande (UWB) la distance entre la carte et le lecteur ; l'objectif est de vérifier que la carte légitime est proche du lecteur ; la première phase de la communication est une phase d'authentification normale ; la deuxième phase comprend un échange très rapide d'interrogations et réponses permettant de mesurer le délai entre l'interrogation et la réponse et de vérifier qu'il n'est pas trop long, ce qui serait un signe de la présence d'un relais intermédiaire ; cette solution ajoute une complexité importante au système RFID, et notamment à la carte RFID ;
- dans une autre méthode, on mesure le temps entre la fin de l'émission de la requête par l'émetteur, et le début de la réponse par la carte ; cela permet de mesurer des temps avec une précision d'environ la moitié de la période du signal ; mais l'instant de réponse de la carte n'est pas forcément toujours bien calé dans le protocole de communication, ce qui oblige à prendre des marges d'incertitude importantes ;
- on peut prévoir des moyens pour que la carte soit désactivée volontairement par l'utilisateur lorsqu'il ne s'en sert pas ; on peut notamment prévoir que la carte est normalement rangée dans un portefeuille à structure de cage de faraday empêchant toute communication ;
- d'autres solutions ont été proposées dans le domaine des clés d'ouverture de portes d'automobiles, mais ces solutions ne sont pas généralisables à la plupart des systèmes RFID.

On a également proposé dans la publication de brevet EP1271420 un système de protection contre les vols de voiture dans lequel le lecteur de carte envoie à la carte une information de temps d'attente à respecter avant de répondre ; la carte reçoit cette information et ne répond qu'après ce temps ; le lecteur vérifie que la réponse arrive dans un créneau temporel qu'il a lui-même imposé.

L'invention propose d'améliorer les systèmes de ce type en renforçant la sécurité contre des tentatives de détection de l'envoi de cette information de temps et en renforçant la précision de la mesure de l'instant d'arrivée de la réponse de la carte.

L'invention a donc pour but de proposer un procédé de protection d'un système de communication sans contact en champ proche (RFID ou autre) contre les attaques malveillantes, qui soit simple, efficace, et difficile à contourner frauduleusement.

Selon l'invention, on propose donc un procédé de protection de la communication entre un lecteur de cartes sans contact et une carte, qui comprend
- l'échange entre le lecteur et la carte d'une information sur une valeur de durée T choisie, mesurée par rapport à un instant de départ t0 vu du côté du lecteur,
- le décodage de cette information de valeur de durée T par la carte,
- l'envoi par la carte d'un signal de retour calé temporellement par rapport à un instant t'0+T, où t'0 est l'instant de départ tel que vu par la carte compte-tenu de délais de propagation ou de traitement des signaux reçus du lecteur,
- la détection du signal de retour par le lecteur,
- la détermination de l'instant d'arrivée du signal de retour par rapport à l'instant t0+T,
- et l'interruption du dialogue par le lecteur si l'instant d'arrivée du signal de retour détecté n'est pas égal à un instant théorique d'arrivée du signal de retour avec une marge d'erreur prédéterminée (-dT1, dT2),
ce procédé étant caractérisé en ce que le signal de retour est une séquence pseudo-aléatoire connue du lecteur, et en ce que la détermination de l'instant d'arrivée du signal de retour par rapport à l'instant t0+T comprend une recherche de maximum de corrélation temporelle entre le signal de retour et une séquence pseudo-aléatoire décalée temporellement par rapport à l'instant t0+T, le décalage temporel de la séquence procurant un maximum de corrélation définissant l'instant d'arrivée du signal de retour.

De préférence, le lecteur et la carte possèdent des générateurs de séquences pseudo-aléatoires identiques générées à partir d'un nombre aléatoire, et en ce que le nombre aléatoire est transmis par le lecteur à la carte pour que la carte et le lecteur établissent des séquences pseudo-aléatoires identiques en vue de la recherche de corrélation.

L'échange entre le lecteur et la carte est de préférence l'envoi de l'information sur la durée T par le lecteur à la carte mais ce peut être aussi de la carte vers le lecteur.

La référence qui définit l'instant t0 est connue a priori par le lecteur et par la carte : c'est par exemple, pour le lecteur, tout simplement la fin de la commande par laquelle le lecteur transmet l'information T à la carte, et cette fin est la dernière transition binaire dans la modulation qui définit cette commande. Pour la carte c'est la même chose, avec un léger décalage temporel dû à la propagation et à la démodulation. Cependant, il est préférable que la référence d'instant t0 soit définie par un signal de synchronisation spécifique, par exemple une impulsion de synchronisation, transmis par le lecteur et reconnu par la carte ; le mieux est que ce signal de synchronisation soit envoyée par le lecteur après un intervalle de temps aléatoire.

L'information de durée T est de préférence transmise sous forme cryptée pour plus de sécurité contre le piratage. Elle est de préférence modifiée par le lecteur d'une séquence de dialogue à une autre.

Pour cela, le protocole d'échange entre le lecteur et la carte comprend de préférence une commande envoyée par le lecteur à la carte, incluant l'envoi d'un nombre aléatoire servant à calculer à la fois dans le lecteur et dans la carte, au moyen d'un même algorithme à clé secrète, la durée T ; puis l'envoi par le lecteur, au bout d'un temps aléatoire, d'une impulsion de synchronisation qui définit le temps t0 de départ de la durée T vu du côté du lecteur.

La réponse de la carte, attendue par le lecteur à l'instant t0+T (ou très peu après) est l'émission d'une séquence de modulation pseudo-aléatoire connue par le lecteur ; le lecteur est apte à générer une séquence pseudo-aléatoire identique calée par rapport à l'instant t0+T, à corréler temporellement cette séquence avec la séquence pseudo-aléatoire reçue de la carte, à déterminer un instant tr pour lequel il y a un pic de corrélation, et à déterminer si l'écart entre tr et l'instant théorique où on attend la réponse de la carte est dans la marge d'erreur acceptée ou non.

La génération d'une séquence pseudo-aléatoire identique dans le lecteur et dans la carte se fait à partir de générateurs identiques dans le lecteur et dans la carte, et elle utilise de préférence un code particulier qui définit de manière univoque la séquence émise par le générateur. Ce code est envoyé au préalable par le lecteur à la carte, ou l'inverse, et ceci de préférence sous forme cryptée, décryptable par la carte. Le nombre aléatoire envoyé par le lecteur pour servir au calcul de la durée T peut d'ailleurs servir à déterminer, à la fois dans le lecteur et dans la carte, la séquence pseudo-aléatoire, à l'aide d'un algorithme à clé secrète, commun au lecteur et à la carte, utilisant ce nombre aléatoire.

Dans une application particulièrement intéressante, le lecteur de cartes est monté sur un véhicule et commande l'ouverture et/ou le démarrage du véhicule.

D'autres caractéristiques et avantages de l'invention apparaîtront à la lecture de la description détaillée qui suit et qui est faite en référence aux dessins annexés dans lesquels :
- la figure 1 représente le principe général d'une attaque-relais ;
- la figure 2 représente un diagramme temporel utilisé selon l'invention dans la communication entre le lecteur et la carte en vue de mieux protéger la carte contre une attaque-relais.
- la figure 3 représente un pic de corrélation détecté lorsque la séquence pseudo-aléatoire reçue est corrélée avec des séquences identiques décalées dans le temps ;
- la figure 4 représente un protocole d'échange avec un retard T' entre la fin d'une commande envoyée par le lecteur et une impulsion de synchronisation à destination de la carte.

On suppose pour simplifier que la carte sans contact et le lecteur fonctionnent selon le principe bien connu suivant : le lecteur et la carte possèdent chacun une antenne inductive, le lecteur est apte à moduler une fréquence porteuse pour transmettre des informations de son antenne vers l'antenne de la carte ; la carte est apte à engendrer une modulation de charge donc d'impédance de son antenne inductive ; cette modulation se répercute sous forme d'une modulation d'impédance de l'antenne du lecteur ; et le lecteur est apte à détecter cette modulation. L'invention est utilisable cependant même si les principes physiques à la base de la communication sont différents. La modulation, au cours du protocole de dialogue entre le lecteur et la carte, est de préférence une modulation d'amplitude d'une fréquence sous-porteuse.

Le protocole de dialogue normal entre un lecteur de carte et une carte sans contact comprend en principe les quatre phases suivantes répétées pour chaque commande adressée par le lecteur à la carte :
1. temps d'émission d'une commande, sous forme d'une modulation d'amplitude de la fréquence sous-porteuse ;
2. temps d'attente du lecteur, pendant lequel le lecteur envoie la fréquence porteuse non modulée et pendant lequel la carte décode la commande reçue du lecteur ;
3. temps de réponse par la carte, par exemple sous forme d'une modulation d'impédance de son antenne, qui se répercute sur l'impédance vue par le lecteur ;
4. temps d'attente de la carte, pendant lequel le lecteur décode la réponse reçue de la carte.

Les modulations de la carte vers le lecteur sont en général des modulations d'amplitude d'une fréquence sous-porteuse de la fréquence porteuse. Du lecteur vers la carte ce sont en général des modulations d'amplitude de la porteuse.

Une fréquence porteuse à 13,56 MHz est fréquemment utilisée. Une sous-porteuse à 847,5 kHz peut être utilisée.

L'invention est applicable avec n'importe quel autre type de modulation. Dans le cas où la carte est active (par exemple un téléphone mobile NFC) les échanges de la carte vers le lecteur (notamment un signal de retour de la carte) peuvent être constitués par une modulation d'un champ électromagnétique émis par la carte elle-même.

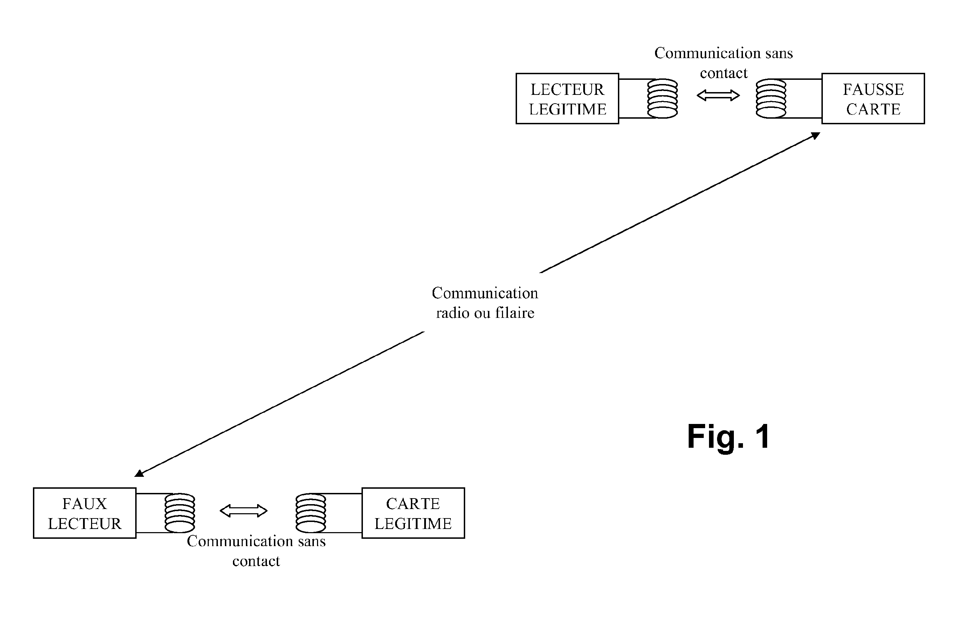

La figure 1 représente le principe d'une attaque-relais visant à faire croire au lecteur de carte qu'il a devant lui une carte légitime alors que c'est une fausse carte qui est présente.

Le lecteur (légitime) 10 est représenté symboliquement avec son antenne inductive 12. La carte légitime 20 est représentée avec son antenne inductive 22. L'attaque-relais est menée par la combinaison d'une fausse carte 30 avec son antenne inductive 32 et d'un faux lecteur 40 avec son antenne inductive 42. Le lecteur légitime 10 envoie des commandes qui sont captées par la fausse carte 30 ; celle-ci les répercute au faux lecteur 40 par voie filaire ou par radio ; le faux lecteur 40 est frauduleusement approché de la carte légitime et lui transmet les commandes en provenance du lecteur légitime ; la carte légitime répond donc ; les réponses sont retransmises du faux lecteur à la fausse carte, et de la fausse carte au lecteur légitime.

Le lecteur légitime croit alors avoir la carte légitime devant lui.

Selon l'invention, au cours d'une commande spécifique, ou comme élément de chaque commande, le lecteur légitime échange avec la carte une information sur une durée T que la carte doit compter à partir d'un instant t0. L'échange se fait de préférence du lecteur vers la carte mais ce pourrait être le contraire. L'instant t0 peut être prédéfini dans le système, c'est-à-dire que le lecteur n'a pas besoin d'envoyer une information sur le temps t0. Mais la valeur de la durée T peut être définie de manière aléatoire par le lecteur (ou la carte). L'instant t0 peut être l'instant de fin de la commande envoyée, qui peut être la dernière transition binaire de la modulation définissant la commande, avant un temps d'attente d'une réponse de la carte ; la carte sait que c'est à partir de cette dernière transition qu'elle doit compter un temps T. Mais on verra plus loin qu'il est préférable que l'instant t0 soit un instant défini par une impulsion de synchronisation spécifique envoyée par le lecteur après la fin de la commande.

La durée T est de préférence inférieure à la durée du temps d'attente du lecteur (temps 2 défini ci-dessus), mais ce n'est pas obligatoire comme on l'expliquera plus loin.

L'information de durée T est transmise soit sous forme d'une valeur numérique binaire exprimée en unités de temps soit sous forme d'une valeur numérique N exprimée en nombres de périodes de la fréquence porteuse, soit encore sous forme cryptée, c'est-à-dire en pratique sous forme de l'envoi d'un nombre qui sert à calculer dans la carte, au moyen d'un algorithme à clé secrète, une durée.

La carte détecte l'instant t0 mais il y a un léger décalage entre le temps t0 vu par le lecteur et le temps correspondant t'0 par la carte, en raison des délais de propagation (extrêmement courts compte-tenu des faibles distances) et des délais de démodulation dans la carte. La carte est agencée pour déclencher un compteur qui compte une durée T à partir de l'instant t'0 et pour envoyer au temps t'0+T un signal de retour reconnaissable par le lecteur. Le comptage peut se faire par comptage de périodes de la fréquence porteuse, par exemple en comptant les passages par zéro. Le comptage peut commencer avant que la carte n'ait décodé la valeur T, pourvu que le décodage soit terminé avant le temps T.

Le temps T est choisi largement supérieur à la durée susceptible de séparer deux transitions binaires successives (dans le même sens) dans le code qui définit les commandes ou informations envoyées par le lecteur. Cela permet à la carte de définir avec certitude à quel instant se situe le temps t0 de fin de commande envoyée par le lecteur. En effet, on peut procéder de la manière suivante, par exemple dans le cas où la fin d'une trame de commande correspond à un front montant (mais cela pourrait être un front descendant) de la modulation binaire : à chaque transition on remet à zéro le compteur qui compte le temps T, et on le laisse recommencer à compter. Ainsi, le comptage du temps ne peut pas aller jusqu'à T tant que la modulation se poursuit. Seule la dernière transition permet au compteur de compter une durée T complète.

La carte compte donc un temps T à partir d'un temps t'0 qui est celui auquel elle voit la fin de la commande envoyée par le lecteur. Compte-tenu de la très grande proximité de la carte et du lecteur, et compte-tenu du très faible temps nécessaire à la détection des transitions binaires par la carte, le temps t'0 est pratiquement égal au temps t0. La différence entre t0 et t'0 peut être égale à une ou deux périodes de la fréquence porteuse.

Au temps t'0+T, la carte envoie le signal de retour, facilement reconnaissable par le lecteur, par exemple parce qu'il s'agit d'une modulation d'amplitude de la fréquence porteuse, alors que le dialogue ordinaire entre le lecteur et la carte se fait sous forme d'une modulation de la fréquence sous-porteuse. Le signal de retour est ici une séquence pseudo-aléatoire émise par la carte et attendue par le lecteur.

La vérification faite par le lecteur consiste à vérifier que le signal de retour arrive à un instant tr qui est bien l'instant attendu, c'est-à-dire globalement à l'instant t0+T, ou si on tient compte des temps incompressibles d'émission, de propagation et de réception des signaux, un instant tr0=t0+T+Δt.. La marge d'erreur maximale acceptée entre tr et tr0 est prédéterminée dans le système.. Cette marge peut être décomposée en deux durées -dT1 et +dT2 situés respectivement avant et après tr0 et c'est ce qu'on considérera dans la suite, avec dT = dT1+dT2 ; mais elle pourrait alternativement être comptée sous forme d'un seul intervalle de temps dT situé après tr0 si on considère qu'il est peu probable que l'impulsion de retour arrive avant tr0. Les valeurs dT1 et dT2 peuvent être de préférence d'une ou deux, voire trois, périodes de la fréquence porteuse (période égale à 73 nanosecondes pour la fréquence de 13,56 MHz).

Si le signal de retour se situe à un instant tr situé à l'intérieur de la marge dT, c'est-à-dire entre tr0-dT1 et tr0+dT2, l'impulsion est considérée comme provenant d'une carte légitime. Si elle n'est pas située dans cet intervalle, elle est considérée comme provenant d'une carte qui a pu faire l'objet d'une attaque-relais . Les marges d'erreur dT1 et dT2 peuvent être identiques ou non.

On reviendra plus loin sur la détermination de l'instant tr représentant l'arrivée du signal de retour constitué par une séquence pseudo-aléatoire. Cette détermination se fait par corrélation temporelle entre le signal de retour (une séquence pseudo-aléatoire) et une séquence pseudo-aléatoire identique produite dans le lecteur.

Si le lecteur détecte par ce moyen une attaque-relais, il interrompt la communication ou prend des mesures propres à neutraliser la tentative d'utilisation frauduleuse de la carte légitime.

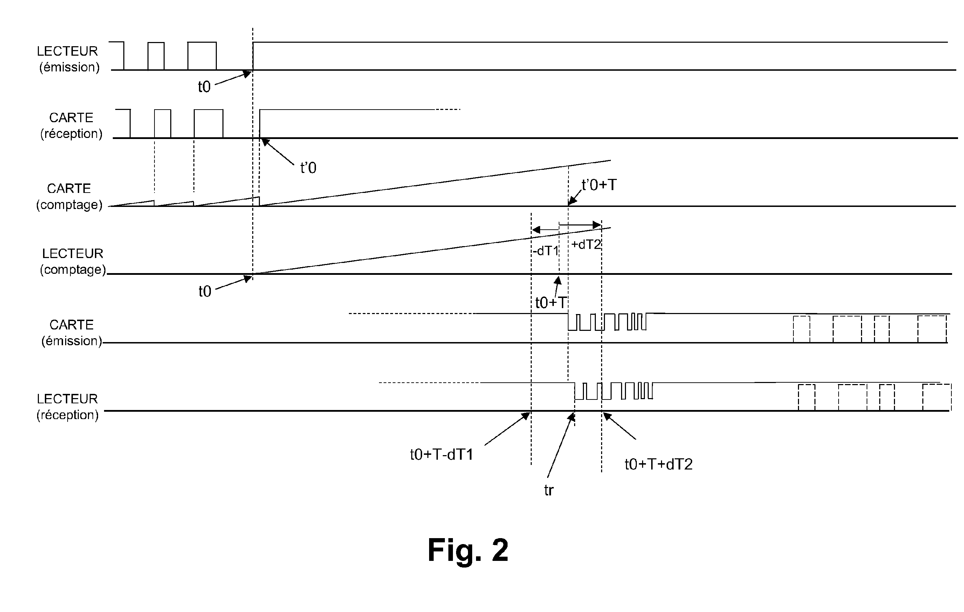

La figure 2 est un chronogramme récapitulatif schématisant les opérations qui viennent d'être décrites, dans un cas où l'instant de départ t0 est défini par la fin d'une commande envoyée par le lecteur à la carte. On verra plus loin que l'instant de départ t0 peut être défini par une impulsion de synchronisation reconnaissable par la carte et envoyée au bout d'un temps T', aléatoire, après la fin de la commande.

La première ligne représente l'émission d'une commande par le lecteur, commande qui est suivie d'un temps d'attente pendant lequel le lecteur émet une porteuse non modulée (représentée sur le dessin par le fait que le signal de modulation reste au niveau haut). La commande se termine au temps t0. Le lecteur attend alors d'une part l'impulsion de retour de la carte, et d'autre part une réponse à la commande. La modulation par le lecteur est ici une modulation d'amplitude de la porteuse. La commande inclut une information sur le temps T, sauf si cette information a été émise lors d'une commande précédente et est toujours valable pour cette commande.

La deuxième ligne représente le signal en provenance du lecteur, tel qu'il est démodulé par la carte. On a simplement représenté la même modulation que celle du lecteur, mais légèrement retardée, c'est-à-dire qu'elle se termine à un instant t'0 postérieur à t0.

La troisième ligne représente un comptage qui est déclenché dans un compteur de la carte à chaque transition positive de la modulation reçue, le véritable comptage de la durée T ne commençant qu'au temps t'0 car auparavant le comptage est réinitialisé à chaque transition positive. La valeur de T a été décodée par la carte à partir de la commande reçue ou d'une commande précédemment reçue. Les comptages sont figurés symboliquement par des rampes linéaires.

La quatrième ligne représente un comptage déclenché dans le lecteur à la fin de la commande émise (t0). Le comptage peut commencer à chaque transition positive et être réinitialisé à chaque transition positive (comme dans la carte), ou bien il peut commencer seulement au temps t0 car le lecteur sait (contrairement à la carte) quand se termine la commande qu'il émet.

La cinquième ligne représente l'émission par la carte d'une modulation constituant un signal de retour commençant au temps t'0+T. Le signal de retour est une séquence pseudo-aléatoire. On a représenté également en pointillés, après le signal de retour, une modulation qui est la réponse de la carte à la commande du lecteur. Les modulations sont de préférence des modulations de l'impédance de l'antenne inductive de la carte, mais c'est de préférence une modulation de la fréquence porteuse en ce qui concerne la séquence pseudo-aléatoire et une modulation de sous-porteuse en ce qui concerne la véritable réponse de la carte à la commande.

La sixième ligne représente le signal reçu et démodulé par le lecteur, comprenant une séquence pseudo-aléatoire démarrant à un instant tr et une modulation ultérieure de sous-porteuse (en pointillés) en provenance de la carte.

Si le signal de retour n'arrive pas dans un intervalle de temps compris entre t0+T-dT1 et t0+T+dT2, c'est-à-dire un intervalle de temps autour d'un temps de réception théorique tr0 proche de t0+T, une attaque-relais est considérée comme potentiellement présente et la communication avec la carte est interrompue, au moins en ce qui concerne l'envoi de données critiques.

Dans le procédé selon l'invention, une immunité partielle contre les attaques-relais provient du fait que certaines attaques-relais vont introduire des temps de réaction supplémentaires empêchant que le lecteur ne reçoive le signal de retour de la carte dans le créneau situé entre t0+T-dT1 et t0+T+dT2.

Une immunité supplémentaire est obtenue lorsque l'information de durée T varie dans le temps, et en particulier lorsque cette information est déterminée à partir d'un signal aléatoire ou pseudo-aléatoire. Et une immunité supplémentaire encore est obtenue si l'information T est envoyée à la carte sous forme cryptée à l'aide d'un cryptage que seule une carte légitime peut décoder. Le cryptage peut d'ailleurs être simple : par exemple, si le lecteur et la carte possèdent en commun une clé de cryptage, le lecteur peut envoyer à la carte le résultat d'un OU-exclusif entre la clé et la valeur de T ; ce résultat peut être décrypté très facilement par la carte en utilisant la clé.

Le signal de retour émis au temps t'0+T par la carte est une séquence de modulation pseudo-aléatoire commençant au temps t'0+T. Le lecteur détecte cette séquence et effectue une recherche de corrélation optimale avec une séquence aléatoire identique. La corrélation est de préférence numérique, c'est-à-dire que la séquence reçue par la carte est numérisée et la recherche de corrélation est effectuée en multipliant la séquence numérisée par diverses séquences numériques identiques les unes aux autres mais décalées progressivement dans le temps. La recherche de corrélation optimale consiste à déterminer quelle est la position temporelle tr de la séquence qui donne le plus fort produit de corrélation avec la séquence reçue de la carte. Cette position temporelle tr est référencée par exemple par rapport au début de la séquence pseudo-aléatoire ; elle est comparée avec le temps t0+T et est considérée comme normale si tr est compris entre t0+T-dT1 et t0+T+dT2, dT1 et dT2 étant les marges d'erreur acceptées. Sinon, le lecteur considère que la carte fait peut être l'objet d'une attaque-relais et il interrompt le fonctionnement normal de la communication.

La corrélation temporelle de séquences pseudo-aléatoires donne une grand précision de mesure de temps. La séquence peut être une m-séquence permettant de créer un pic de corrélation fin et facilement détectable.

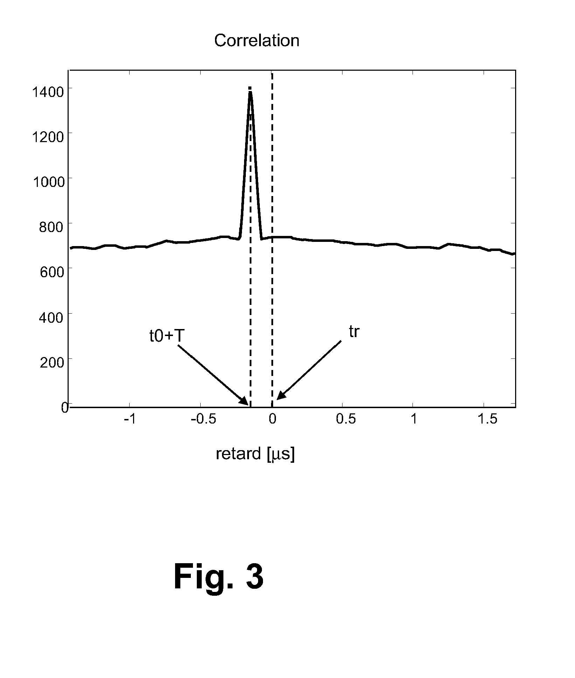

La figure 3 représente à titre d'exemple un pic de corrélation (unités arbitraires en ordonnée) qui peut être détecté lorsque la séquence pseudo-aléatoire reçue est corrélée avec des séquences identiques décalées dans le temps. La largeur du pic de corrélation est égale à la durée de l'impulsion la plus courte présente dans la séquence. La détermination de la position précise du sommet du pic est faite avec une précision bien supérieure à cette durée. Si la modulation se fait à la fréquence porteuse, la durée peut être de 73 nanosecondes et la précision de la détection du retour de la carte est bien meilleure que 73 nanosecondes.

En abscisse on a indiqué les décalages temporels qu'on applique à la séquence pseudo-aléatoire du lecteur et en ordonnée l'amplitude du signal de corrélation entre la séquence décalée et le signal reçu.

La corrélation prend du temps de calcul, mais même si le résultat de la corrélation et la décision de ne pas poursuivre le dialogue sont prises après une ou plusieurs séquences d'envoi de commandes par le lecteur à la carte, l'interruption du dialogue sera effective avant que des échanges critiques (du point de vue de la sécurité) n'aient eu lieu.

L'émission de la séquence pseudo-aléatoire par la carte peut d'ailleurs se répéter sur plusieurs séquences successives pour améliorer la corrélation, et ceci même pendant le dialogue de la carte avec le lecteur si la modulation par cette séquence pseudo-aléatoire est une modulation de la porteuse et ne se confond pas avec la modulation de la sous-porteuse.

Une sécurité supplémentaire peut être introduite en prévoyant que le lecteur et la carte disposent de générateurs de séquences pseudo-aléatoires identiques commandables par un code de quelques bits avec une relation biunivoque entre le code de commande et la séquence émise. Ce code de quelques bits est transmis sous forme cryptée (en même temps que l'information de durée T) à la carte pour que celle-ci établisse une séquence identique. Si la séquence envoyée par la carte n'est pas celle attendue par le lecteur, on ne trouvera pas de pic de corrélation suffisamment marqué. Le code transmis par le lecteur à cet effet peut servir non seulement à la sélection d'une séquence pseudo-aléatoire dans le lecteur et dans la carte, à partir d'un même algorithme de sélection, mais aussi à la sélection d'une durée d'attente T, calculée par le lecteur et la carte à partir d'un même algorithme de calcul. Ces algorithmes reposent sur l'utilisation d'un nombre aléatoire (le code binaire mentionné ci-dessus) transmis en clair par le lecteur, et d'une clé secrète connue du lecteur et de la carte. La fonction des algorithmes est univoque, c'est-à-dire que pour un code donné, on aboutit à une durée T unique et une séquence pseudo-aléatoire unique.

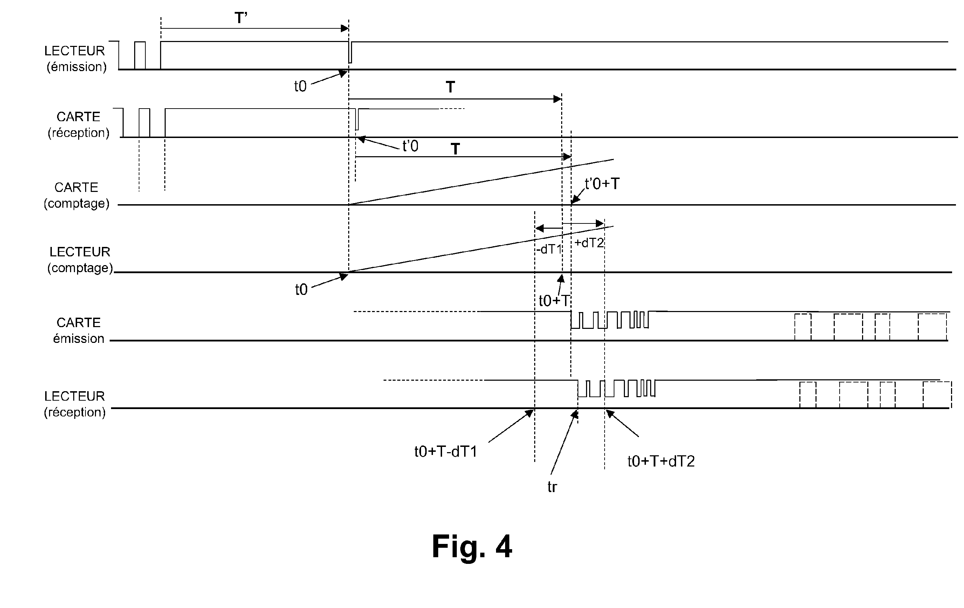

La figure 4 représente un perfectionnement supplémentaire selon lequel l'instant t0 de début du comptage de la durée T n'est pas la fin de la transmission d'une commande envoyée par le lecteur à la carte, mais c'est un instant séparé de cette fin de commande d'une durée T' qui est générée aléatoirement par le lecteur. La durée T' se termine par l'émission d'une impulsion de synchronisation par le lecteur à l'instant t0 ; l'instant t0 est donc variable d'une interrogation à la suivante puisqu'il est déterminé aléatoirement par le lecteur ; la carte est en attente de cette impulsion et commence son comptage de la durée T à l'instant t'0 où elle reçoit l'impulsion de synchronisation. Le lecteur commence le même comptage à l'instant t0 comme cela a été expliqué en référence à la figure 2. Pour le reste, le fonctionnement est le même qu'à la figure 2.

Ce temps aléatoire T' permet d'empêcher qu'un attaquant prédise l'instant t0 et envoie un signal de synchronisation juste avant que le lecteur ne le fasse, ce qui permettrait à l'attaquant de compenser les retards que le relais introduit.

Si on résume maintenant l'ensemble du protocole avec les sécurités supplémentaires ainsi introduites, on a les étapes suivantes :
Le lecteur envoie une commande ou requête à destination des cartes éventuellement présentes dans le champ du lecteur. Dans cette commande, le lecteur envoie un nombre arbitraire A, généré aléatoirement donc différent d'une commande à la suivante.

La carte reçoit la commande et la décode. Elle décode en particulier le nombre A.

Le lecteur et la carte utilisent le même nombre A pour calculer à l'aide du même algorithme à clé secrète k une durée T ; ils utilisent également ce nombre pour déterminer une séquence pseudo-aléatoire particulière S parmi différentes séquences possibles.

En même temps, le lecteur génère aléatoirement un nombre représentant une durée T', durée de retard avant l'émission d'une impulsion de synchronisation. Il ne transmet pas ce nombre à la carte.

Le lecteur compte alors une durée T' après la fin de la commande envoyée à la carte, et il émet une impulsion brève de synchronisation à un instant t0 qui est la fin de cette durée T'. Dès cet instant, il commence le comptage de la durée T calculée précédemment.

La carte, en attente de l'impulsion de synchronisation, reçoit et reconnaît cette impulsion à un instant t'0 ; à cet instant, elle commence le comptage de la durée T qu'elle a préalablement calculée.

A l'instant t0+T le lecteur émet une séquence pseudo-aléatoire qui est la même que celle que la carte doit envoyer. La séquence produite par le lecteur est donc calée sur un instant de référence t0+T.

A l'instant t'0+T, la carte émet la séquence pseudo-aléatoire constituant le signal de retour.

Le lecteur reçoit la séquence de la carte et l'échantillonne avec une haute résolution temporelle (résolution correspondant à la précision avec laquelle on veut déterminer l'instant de retour de cette séquence).

Le lecteur corrèle temporellement la séquence synthétisée et la séquence reçue, c'est-à-dire qu'il recherche de quel intervalle de temps il faut décaler la séquence synthétisée, calée sur le temps t0+T, pour obtenir la corrélation maximale avec la séquence reçue. Il est équivalent de dire que le lecteur produit une série de séquences temporelles progressivement décalées par rapport au temps t0+T et qu'il recherche laquelle de ces séquences produit la meilleure corrélation avec la séquence reçue.

Cette recherche de corrélation donne un temps tr qui est considéré comme l'instant de réception du signal de retour.

Ce temps est comparé avec un instant théorique tr0 de réponse attendue de la carte. Selon la valeur de l'écart entre tr et tr0, la réponse est considérée comme authentique ou au contraire comme faisant l'objet d'une attaque relais. Dans le premier cas, le dialogue avec la carte peut continuer. Dans le deuxième cas, le lecteur interdit la poursuite de l'échange avec la carte. L'instant tr0 peut être l'instant t0+T si le lecteur fait l'hypothèse que la réponse théorique de la carte est extrêmement rapide. Sinon, c'est un instant à tr+T0+ΔT légèrement postérieur à tr+T0.

## Revendications

1. Procédé de protection de la communication entre un lecteur de cartes sans contact et une carte, qui comprend l'échange entre le lecteur et la carte d'une information sur une valeur de durée T choisie, mesurée par rapport à un instant de départ t0 vu du côté du lecteur, le décodage de cette information de valeur de durée T par la carte, l'envoi par la carte d'un signal de retour calé temporellement par rapport à un instant t'0+T, où t'0 est l'instant de départ tel que vu par la carte compte-tenu de délais de propagation ou de traitement des signaux reçus du lecteur, la détection du signal de retour par le lecteur, la détermination du calage temporel du signal de retour par rapport à l'instant de départ t0, et l'interruption du dialogue par le lecteur si le calage temporel du signal de retour détecté n'est pas égal à un instant théorique d'arrivée du signal de retour avec une marge d'erreur prédéterminée (-dT1, dT2), **caractérisé en ce que** le signal de retour est une séquence pseudo-aléatoire connue du lecteur, et **en ce que** la détermination de l'instant d'arrivée du signal de retour par rapport à l'instant t0+T comprend une recherche de maximum de corrélation temporelle entre le signal de retour et une séquence pseudo-aléatoire décalée temporellement par rapport à l'instant t0+T, le décalage temporel de la séquence procurant un maximum de corrélation définissant l'instant d'arrivée du signal de retour.

2. Procédé de protection selon la revendication 1, **caractérisé en ce que** le lecteur et la carte possèdent des générateurs de séquences pseudo-aléatoires identiques générées à partir d'un nombre aléatoire, et **en ce que** le nombre aléatoire est transmis par le lecteur à la carte pour que la carte et le lecteur établissent des séquences pseudo-aléatoires identiques en vue de la recherche de corrélation.

3. Procédé selon l'une des revendications 1 et 2, **caractérisé en ce que** le lecteur envoie une commande à la carte, incluant l'envoi d'un nombre aléatoire servant à calculer à la fois dans le lecteur et dans la carte, au moyen d'un même algorithme à clé secrète, la durée T.

4. Procédé de protection selon l'une des revendications 1 et 2, **caractérisé en ce que** l'instant t0 est une dernière transition de modulation dans une commande envoyée par le lecteur avant un temps d'attente de réponse de la carte.

5. Procédé de protection selon l'une des revendications 1 à 3, **caractérisé en ce que** l'instant t0 est défini par un signal de synchronisation qui suit, avec un intervalle de temps T' ayant une valeur générée aléatoirement par le lecteur, la fin d'une commande envoyée par le lecteur.

6. Procédé de protection selon l'une des revendications 1 à 5, **caractérisé en ce que** l'information T est transmise par le lecteur sous forme cryptée à la carte, la carte comportant des moyens de décryptage correspondants.

7. Procédé de protection selon la revendication 6, **caractérisé en ce que** l'information T est modifiée par le lecteur d'une séquence de dialogue à une autre.

8. Procédé de protection selon l'une des revendications 1 à 7, **caractérisé en ce que** le signal de retour de la carte module une fréquence porteuse utilisée dans la communication.

9. Procédé de protection selon la revendication 8, dans lequel la modulation utilisée dans les échanges entre le lecteur et la carte est une modulation d'amplitude de sous-porteuse, **caractérisé en ce que** le signal de retour est transmis sous forme d'une modulation d'amplitude directe de la fréquence porteuse, pouvant être facilement distinguée par rapport à une modulation de sous-porteuse.

10. Procédé de protection selon l'une des revendications 1 à 9, **caractérisé en ce que** le signal de retour de la carte vers le lecteur est une modulation d'un champ électromagnétique émis par la carte elle-même.

11. Procédé selon l'une des revendications 1 à 10, **caractérisé en ce que** le lecteur de cartes est monté sur un véhicule et commande l'ouverture et/ou le démarrage du véhicule.

## Patentansprüche

1. Verfahren zum Schützen der Kommunikation zwischen einem kontaktlosen Kartenleser und einer Karte, das Folgendes beinhaltet: Austauschen einer Information über einen Wert von gewählter Dauer T zwischen dem Leser und der Karte, gemessen mit Bezug auf einen Ausgangszeitpunkt t0 wie seitens des Lesers gesehen, Decodieren dieser Information des Wertes von Dauer T durch die Karte, Senden eines Rückkehrsignals durch die Karte, das zeitlich in Bezug auf einen Zeitpunkt t'0+T versetzt ist, wobei t'0 der Ausgangszeitpunkt ist, wie er von der Karte unter Berücksichtigung von Ausbreitungs- oder Bearbeitungsverzögerungen von vom Leser empfangenen Signalen gesehen wird, Erkennen des Rückkehrsignals durch den Leser, Ermitteln des Timings des Rückkehrsignals mit Bezug auf den Ausgangszeitpunkt t0, und Unterbrechen des Dialogs durch den Leser, wenn das Timing des erkannten Rückkehrsignals nicht gleich einem theoretischen Ankunftszeitpunkt des Rückkehrsignals mit einer vorbestimmten Fehlermarge (-dT1, dT2) ist, **dadurch gekennzeichnet, dass** das Rückkehrsignal eine bekannte pseudozufällige Sequenz des Lesers ist, und dadurch, dass die Ermittlung des Ankunftszeitpunkts des Rückkehrsignals mit Bezug auf den Zeitpunkt t0+T eine Suche der maximalen zeitlichen Korrelation zwischen dem Rückkehrsignal und einer pseudozufälligen Sequenz beinhaltet, die zeitlich mit Bezug auf den Zeitpunkt t0+T versetzt ist, zeitliches Versetzen der Sequenz, um ein Korrelationsmaximum zu erhalten, das den Ankunftszeitpunkt des Rückkehrsignals definiert.

2. Schutzverfahren nach Anspruch 1, **dadurch gekennzeichnet, dass** der Leser und die Karte Generatoren für identische pseudozufällige Sequenzen besitzen, die auf der Basis einer Zufallszahl erzeugt werden, und dadurch, dass die Zufallszahl vom Leser zu der Karte übertragen wird, damit die Karte und der Leser identische pseudozufällige Sequenzen im Hinblick auf die Korrelationssuche festlegen.

3. Verfahren nach einem der Ansprüche 1 und 2, **dadurch gekennzeichnet, dass** der Leser einen Befehl zur Karte sendet, der das Senden einer Zufallszahl beinhaltet, die zum gleichzeitigen Berechnen der Dauer T im Leser und in der Karte mittels desselben Geheimschlüsselalgorithmus dient.

4. Schutzverfahren nach einem der Ansprüche 1 und 2, **dadurch gekennzeichnet, dass** der Zeitpunkt t0 ein letzer Modulationsübergang in einem Befehl ist, der vom Leser vor einer Antwortwartezeit der Karte gesendet wird.

5. Schutzverfahren nach einem der Ansprüche 1 bis 3, **dadurch gekennzeichnet, dass** der Zeitpunkt t0 durch ein Synchronisationssignal definiert wird, das mit einem Zeitintervall T' mit einem zufällig durch den Leser erzeugten Wert auf das Ende eines vom Leser gesendeten Befehls folgt.

6. Schutzverfahren nach einem der Ansprüche 1 bis 5, **dadurch gekennzeichnet, dass** die Information T vom Leser in verschlüsselter Form zur Karte übertragen wird, wobei die Karte entsprechende Entschlüsselungsmittel umfasst.

7. Schutzverfahren nach Anspruch 6, **dadurch gekennzeichnet, dass** die Information T vom Leser von einer Dialogsequenz zu einer anderen modifiziert wird.

8. Schutzverfahren nach einem der Ansprüche 1 bis 7, **dadurch gekennzeichnet, dass** das Rückkehrsignal der Karte eine in der Kommunikation verwendete Trägerfrequenz moduliert.

9. Schutzverfahren nach Anspruch 8, bei dem die im Austausch zwischen dem Leser und der Karte verwendete Modulation eine Subträgeramplitudenmodulation ist, **dadurch gekennzeichnet, dass** das Rückkehrsignal in Form einer direkten Amplitudenmodulation der Trägerfrequenz übertragen wird, so dass leicht in Bezug auf eine Subträgermodulation unterschieden werden kann.

10. Schutzverfahren nach einem der Ansprüche 1 bis 9, **dadurch gekennzeichnet, dass** das Rückkehrsignal der Karte zum Leser eine von der Karte selbst emittierte Modulation eines elektromagnetischen Feldes ist.

11. Verfahren nach einem der Ansprüche 1 bis 10, **dadurch gekennzeichnet, dass** der Kartenleser an einem Fahrzeug montiert ist und das Öffnen und/oder Starten des Fahrzeugs steuert.

## Claims

1. A method of protection of communication between a contactless card reader and a card, which comprises the exchange between the reader and the card of information on a chosen value of duration T, measured with respect to a starting instant t0 seen from the reader side, the decoding of this information of a value of duration T by the card, the sending by the card of a return signal temporally set with respect to an instant t'0+T, where t'0 is the starting instant as seen by the card taking into account delays in propagation or processing of the signals received from the reader, the detection of the return signal by the reader, the determination of the temporal setting of the return signal with respect to the starting instant t0, and the interruption of the dialog by the reader if the temporal setting of the return signal detected is not equal to a theoretical instant of arrival of the return signal with a predetermined margin of error (-dT1, dT2), **characterized in that** the return signal is a pseudo-random sequence known to the reader, and **in that** the determination of the instant of arrival of the return signal with respect to the instant t0+T comprises a search for maximum temporal correlation between the return signal and a pseudo-random sequence temporally offset with respect to the instant t0+T, the temporal offsetting of the sequence providing a maximum of correlation defining the instant of arrival of the return signal.

2. The method of protection as claimed in claim 1, **characterized in that** the reader and the card possess generators of identical pseudo-random sequences generated from a random number, and **in that** the random number is transmitted by the reader to the card for the card and the reader to establish identical pseudo-random sequences with a view to the search for correlation.

3. The method as claimed in either of claims 1 and 2, **characterized in that** the reader sends a command to the card, including sending a random number used to calculate both in the reader and in the card, by means of the same secret key algorithm, the duration T.

4. The method of protection as claimed in either of claims 1 and 2, **characterized in that** the instant t0 is a last modulation transition in a command sent by the reader before a response waiting time of the card.

5. The method of protection as claimed in one of claims 1 to 3, **characterized in that** the instant t0 is defined by a synchronization signal which follows, with a time interval T' having a value randomly generated by the reader, the end of a command sent by the reader.

6. The method of protection as claimed in one of claims 1 to 5, **characterized in that** the information T is transmitted by the reader in encrypted form to the card, the card having corresponding means of decryption.

7. The method of protection as claimed in claim 6, **characterized in that** the information T is modified by the reader from one dialog sequence to another.

8. The method of protection as claimed in one of claims 1 to 7, **characterized in that** the return signal from the card modulates a carrier frequency used in communication.

9. The method of protection as claimed in claim 8, **characterized in that** the modulation used in the exchanges between the reader and the card is a subcarrier amplitude modulation, **characterized in that** the return signal is transmitted in the form of a direct amplitude modulation of the carrier frequency, capable of being easily distinguished with respect to a subcarrier modulation.

10. The method of protection as claimed in one of claims 1 to 9, **characterized in that** the return signal from the card to the reader is a modulation of an electromagnetic field transmitted by the card itself.

11. The method as claimed in one of claims 1 to 10, **characterized in that** the card reader is fitted on a vehicle and controls the opening and/or starting of the vehicle.
